# EUROPÄISCHE PATENTSCHRIFT

(11) **EP 2 052 159 B1**
(45) Veröffentlichungstag und Bekanntmachung des Hinweises auf die Patenterteilung: **09.01.2019**
(21) Anmeldenummer: 07786680.4
(22) Anmeldetag: 14.08.2007
(51) Int. Cl.: F04D 13/06, F04D 29/62

(54) **STATORANORDNUNG FÜR EIN PUMPENAGGREGAT**
STATOR ARRANGEMENT FOR A PUMP UNIT
ENSEMBLE DE STATOR POUR UN GROUPE DE POMPES

(30) Priorität: 14.08.2006 DK 200601061
(43) Veröffentlichungstag der Anmeldung: 29.04.2009
(73) Patentinhaber: Grundfos Management A/S, 8850 Bjerringbro (DK)
(72) Erfinder: MIKKELSEN, Steen, 8850 Bjerringbro (DK)
(74) Vertreter: Vollmann, Heiko
(86) Internationale Anmeldenummer: PCT/EP2007/007170
(87) Internationale Veröffentlichungsnummer: WO 2008/019818

(56) Entgegenhaltungen:
- EP-A- 0 281 818
- DE-A1- 4 013 730
- DE-A1- 10 005 505
- FR-A- 1 532 766
- GB-A- 925 881
- US-A- 3 704 078
- US-A- 4 019 836
- US-A- 5 641 276
- US-A1- 2002 083 572

## Beschreibung

Die Erfindung betrifft eine Statoranordnung für ein Pumpenaggregat, insbesondere für ein Heizungsumwälzpumpenaggregat sowie ein Verfahren zur Montage einer derartigen Statoranordnung.

Bekannte Heizungsumwälzpumpenaggregate bestehen aus mehreren Einzelteilen, welche häufig zunächst zu Untergruppen zusammengefügt und dann in einer Endmontage zusammengebaut werden. Wesentliche Bestandteile sind ein Pumpengehäuse mit einem darin angeordneten Laufrad sowie ein Statorgehäuse, in welchem der elektrische Antrieb aufgenommen ist. Dieser besteht aus einem Stator, einem im Inneren des Stators angeordneten Spaltrohr und einem darin angeordneten Rotor, welcher mit dem Laufrad verbunden ist. Darüber hinaus ist üblicherweise an das Statorgehäuse ein Klemmenkasten angesetzt, welcher die elektrischen Anschlüsse und üblicherweise eine Steuer- bzw. Regelelektronik gegebenenfalls mit Bedienelementen enthält. Stator und Statorgehäuse werden häufig vor der Montage des Pumpenaggregates zu einer Statoranordnung zusammengefügt, was dadurch geschehen kann, dass das Statorgehäuse auf den darin angeordneten Stator aufgeschrumpft wird, so dass hier eine Presspassung entsteht, durch welche der Stator im Inneren des Statorgehäuses festgehalten wird.

Aus FR 1,532,766 ist eine Pumpe bekannt, bei welcher der Stator in einer Aufnahme des Pumpengehäuses eingesetzt ist, und dort mittels einer von der Umfangsseite her von außen in das Pumpengehäuse eingesetzten Schraube fixiert ist. Darüber hinaus sind beispielsweise aus US 3,704,078, US 2002/0083572 und EP 0 281 818 A1 Anordnungen bekannt, bei welchen der Stator mittels einer Schraube, welche sich durch eine Ausnehmung in dem Stator erstreckt, an dem Pumpengehäuse befestigt ist.

FR 2 596 929 A1 offenbart einen Anlasser für ein Kraftfahrzeug, welcher ein äußeres Gehäuse aufweist, in welches ein Statorblechpaket eingesetzt ist. Dieses ist in dem Gehäuse durch einen konischen Ring zwischen der Statoranordnung und dem Gehäuse geklemmt, wobei der konische Ring durch sich parallel zur Längsachse des Gehäuses erstreckende Spannstifte in axialer Richtung gegen das Gehäuse verspannt ist.

Es ist Aufgabe der Erfindung, eine Statoranordnung für ein Pumpenaggregat, insbesondere ein Heizungsumwälzpumpenaggregat zu schaffen, welche eine einfache Montage ermöglicht. Diese Aufgabe wird durch eine Statoranordnung mit den in Anspruch 1 angegebenen Merkmalen, durch ein Pumpenaggregat mit den in Anspruch 12 angegebenen Merkmalen sowie durch ein Verfahren zur Montage einer Statoranordnung mit den im Anspruch 13 angegebenen Merkmalen und durch ein Verfahren zum Herstellen eines Pumpenaggregates mit den in Anspruch 17 angegebenen Merkmalen gelöst. Bevorzugte Ausführungsformen ergeben sich aus den zugehörigen Unteransprüchen.

Die erfindungsgemäße Statoranordnung ist zur Verwendung in einem Pumpenaggregat vorgesehen, insbesondere in einem Heizungsumwälzpumpenaggregat. Die Statoranordnung weist ein Statorgehäuse und einen darin angeordneten Stator und gegebenenfalls weitere Bauteile, wie beispielsweise einen Klemmenkasten auf.

Erfindungsgemäß ist zumindest ein Verriegelungselement vorgesehen, welches den Stator in dem Statorgehäuse fixiert. Auf diese Weise kann auf den Schrumpfprozess, welcher ein Erwärmen des Statorgehäuses erfordert, verzichtet werden. Die Befestigung des Stators in dem Statorgehäuse erfolgt nach dem Einsetzen des Stators in das Statorgehäuse vielmehr einfach in mechanischer Weise durch ein zusätzliches Bauteil, nämlich das erfindungsgemäß vorgesehene Verriegelungselement. Auf diese Weise wird eine vormontierte Statoranordnung geschaffen, bei welcher der Stator fest in dem Statorgehäuse gehalten ist.

Das Verriegelungselement erstreckt sich zwischen dem Außenumfang des Stators und dem Innenumfang des Statorgehäuses, d. h. an der Außenseite des Stators entlang. Dazu ist bevorzugt am Außenumfang des Stators und/oder am Innenumfang des Statorgehäuses eine Ausnehmung ausgebildet, in welche das Verriegelungselement eingesetzt ist. Für den Fall, dass mehrere Verriegelungselemente vorgesehen sein sollten, können mehrere derartige Ausnehmungen, vorzugsweise über den Umfang des Stators verteilt vorgesehen sein. Die Anordnung derartiger Ausnehmungen hat den Vorteil, dass in den übrigen Umfangsbereichen der Stator mit seinem Außenumfang direkt am Innenumfang des Statorgehäuses anliegen kann, so dass eine kompakte Ausgestaltung und spielfreie Lagerung des Stators im Statorgehäuse möglich ist.

Das Verriegelungselement ist in der Statoranordnung von einer gelösten Position, in welcher der Stator in dem Statorgehäuse bewegbar ist, in eine verriegelte Position bewegbar, in welcher der Stator in dem Statorgehäuse fixiert ist. Dies ermöglicht es, dass der Stator zum Einsetzen in das Statorgehäuse in dem Statorgehäuse axial und gegebenenfalls auch in Umfangsrichtung bewegbar ist und anschließend durch Drehen des Verriegelungselements in die verriegelte Position in dem Statorgehäuse fixiert wird.

Gemäß einer bevorzugten Ausführungsform ist an dem Verriegelungselement ein Sperrelement ausgebildet, welches durch Bewegung des Verriegelungselementes von dessen gelöster in dessen verriegelten Position aus einer Sperrposition in ein Freigabeposition bewegbar ist, wobei in der Sperrposition durch das Sperrelement die Anbringung weiterer Komponenten eines Pumpenaggregates, insbesondere eines Spaltrohres und/oder Pumpengehäuses, an der Statoranordnung blockiert wird. Auf diese Weise kann durch das Sperrelement sichergestellt werden, dass die weitere Montage des Pumpenaggregates nur dann möglich ist, wenn das Verriegelungselement in seiner verriegelten Position ist, in welcher der Stator in dem Statorgehäuse fixiert ist. Durch die Bewegungskopplung von Verriegelungselement und Sperrelement wird dabei sichergestellt, dass immer dann, wenn das Verriegelungselement in der gelösten Position ist, das Sperrelement in der Sperrposition ist. In dieser Position wird verhindert, dass ein weiteres Bauteil bzw. eine weitere Komponente des Pumpenaggregates an der Statoranordnung montiert werden kann. Dies kann insbesondere das Spaltrohr oder das Pumpengehäuse sein. Das Sperrelement kann dabei in Form eines Vorsprungs an dem Verriegelungselement ausgebildet sein, welcher in der Sperrposition beispielsweise verhindert, dass das Spaltrohr vollständig in das Statorgehäuse eingesetzt werden kann oder dass das Statorgehäuse an das Pumpengehäuse angesetzt werden kann. Wenn das Verriegelungselement in seine verriegelte Position bewegt wird, bewegt sich das Sperrelement in eine Freigabeposition, in welcher es das Zusammenfügen mit weiteren Komponenten nicht mehr blockiert. Beispielsweise wird ein das Sperrelement bildender Vorsprung in eine Position bewegt, in welcher er das Einsetzen des Spaltrohres oder das Ansetzen eines Pumpengehäuses nicht mehr blockiert. Auf diese Weise kann die stets korrekte Montage des Pumpenaggregates sichergestellt werden.

Bevorzugt ist das Verriegelungselement als Verriegelungsstift ausgebildet, der zwischen Statorgehäuse und Stator eingeschoben und verklemmt wird, so dass er eine kraftschlüssige Verbindung zwischen dem Stator und dem Statorgehäuse bewirkt.

Gemäß einer weiteren bevorzugten Ausführungsform ist an dem Statorgehäuse ein Klemmenkasten angeordnet, wobei das Verriegelungselement elektrisch leitend ausgebildet ist und eine elektrisch leitende Verbindung zwischen einem Erdungsanschluss in dem Klemmenkasten und dem Stator und/oder dem Statorgehäuse bildet. Auf diese Weise kann das Verriegelungselement neben der Fixierung des Stators in dem Statorgehäuse eine weitere Funktion, nämlich die Herstellung der Erdung zwischen Stator und Statorgehäuse auf der einen Seite und einem Erdungsanschluss in dem Klemmenkasten auf der anderen Seite sicherstellen. Dabei ist das Verriegelungselement bevorzugt derart ausgebildet, dass sichergestellt ist, dass in einer verriegelten Position, in welcher der Stator in dem Statorgehäuse fixiert ist, stets auch der elektrische Kontakt zu dem Erdungsanschluss in dem Klemmenkasten hergestellt ist. Der Erdungsanschluss ist vorzugsweise mit einem Anschlussstecker in dem Klemmenkasten verbunden oder bildet selber Teil des Anschlusssteckers, an welchen eine Anschlussleitung zur Versorgung des Pumpenaggregates mit elektrischer Energie angeschlossen werden kann.

Weiter bevorzugt ist das Verriegelungselement von einer Stirnseite des Statorgehäuses her, vorzugsweise von einer zur Verbindung mit einem Pumpengehäuse vorgesehenen Stirnseite her, in das Statorgehäuse eingesetzt. Auf diese Weise kann auf zusätzliche Öffnungen in dem Statorgehäuse für das Verriegelungselement verzichtet werden, so dass keine zusätzlichen, abzudichtenden Bereiche an dem Statorgehäuse geschaffen werden. Besonders bevorzugt wird das Verriegelungselement von der Stirnseite her eingesetzt, an welche später das Pumpengehäuse an das Statorgehäuse angesetzt wird. Diese Stirnseite wird dann durch das Pumpengehäuse abgeschlossen oder überdeckt.

Das Verriegelungselement ist als Verriegelungsstift ausgebildet, welcher sich bevorzugt parallel zur Längsachse des Stators erstreckt. Dabei kann der Verriegelungsstift sich außen am Stator zwischen Außenumfang des Stators und Innenumfang des Statorgehäuses entlang erstrecken, wobei dazu am Außenumfang des Stators und/oder am Innenumfang des Statorgehäuses eine sich axial erstreckende Ausnehmung ausgebildet sein kann. Ein solcher Stift kann von der Stirnseite des Statorgehäuses in das Statorgehäuse eingesetzt werden, nachdem der Stator in das Statorgehäuse eingeschoben ist.

Besonders bevorzugt erstreckt sich der Verriegelungsstift ausgehend von einer ersten Stirnseite des Statorgehäuses, welcher zur Verbindung mit einem Pumpengehäuse ausgebildet ist in einen an der entgegengesetzten Stirnseite des Statorgehäuses angeordneten Klemmenkasten hinein. Hierdurch kann der Verriegelungsstift, welcher bei dieser Ausführungsform bevorzugt elektrisch leitend ausgebildet ist, in dem Klemmenkasten mit einem Erdungsanschluss bzw. Erdungskontakt in Kontakt bzw. in Eingriff treten, um auf diese Weise die Erdungsverbindung des Stators und des Statorgehäuses mit einem Erdungsanschluss herzustellen. Auch das Pumpengehäuse, welches vorzugsweise mit dem Statorgehäuse verschraubt wird, wird dann über diese Verbindung geerdet. Durch diese Ausgestaltung des Verriegelungsstiftes wird sichergestellt, dass der Verriegelungsstift, wenn er in das Statorgehäuse eingesetzt ist und den Stator in dem Statorgehäuse fixiert, gleichzeitig auch die Erdung sicherstellt. Insoweit wird hier die Montage vereinfacht und sichergestellt, dass stets eine korrekte Erdung gegeben ist. In dem Fall, das der Verriegelungsstift nicht richtig eingesetzt ist, wäre auch der Stator in dem Statorgehäuse nicht fixiert und im Idealfall, falls ein Sperrelement vorgesehen ist, das Pumpenaggregat auch im Übrigen nicht weiter montierbar, wie oben beschrieben.

Der Verriegelungsstift ist derart ausgebildet, dass er in zumindest einem Abschnitt seiner axialen Erstreckung einen Querschnitt aufweist, welcher in einer ersten Durchmesserrichtung eine größere Ausdehnung aufweist als in einer zweiten sich abgewinkelt zu der ersten Durchmesserrichtung erstreckenden Durchmesserrichtung. Der Winkel zwischen diesen beiden Durchmesserrichtungen liegt vorzugsweise zwischen 0 und 180°, weiter bevorzugt zwischen 60 und 120°, beispielsweise bei 90°. Durch diese Ausgestaltung, ist es möglich, dass der Verriegelungsstift durch Drehen um diesen Winkelbetrag, in dem die Durchmesserrichtungen zueinander abgewinkelt sind, von der gelösten in die verriegelte Position gebracht wird. Durch das Drehen wird die Durchmesserrichtung mit der größeren Ausdehnung in die radiale Richtung zur Statorlängsachse gedreht und die diametral am weitesten beabstandeten Bereiche des Querschnitts des Verriegelungstifts kommen in Kontakt mit Stator und Rotor und können so eine Klemmkraft erzeugen.

Dazu ist vorzugsweise zwischen dem Stator und dem Statorgehäuse eine Ausnehmung ausgebildet, in welcher der Verriegelungsstift angeordnet ist, wobei die Ausnehmung in radialer Richtung bezogen auf die Längsachse des Stators eine Breite aufweist, welche kleiner als die Ausdehnung des Verriegelungsstiftes in der ersten Durchmesserrichtung und größer als die Ausdehnung des Verriegelungsstiftes in der zweiten Durchmesserrichtung ist. Wenn ein Verriegelungsstift, wie er vorangehend beschrieben wurde, in eine derartige Ausnehmung eingesetzt wird und dann gedreht wird, kann eine Verklemmen zwischen Stator und Statorgehäuse erreicht werden, wenn der Verriegelungsstift in eine Stellung gedreht wird, in welcher sich seine erste Durchmesserrichtung mit größerer Ausdehnung in radialer Richtung erstreckt. Da in dieser Richtung die Breite der Ausnehmung kleiner als der Durchmesser des Verriegelungsstiftes in dieser Position ist, kommt es dann zu einer Presspassung zwischen Stator und Statorgehäuse. Die Ausnehmung kann allein in dem Statorgehäuse oder alleine in dem Stator oder zu Teilen in beiden ausgebildet sein, so dass idealerweise der Verriegelungsstift in radialer Richtung sowohl in das Statorgehäuse als auch den Stator eingreift. Auf diese Weise kann der Stator auch in einer bestimmten Winkelposition bezüglich des Statorgehäuses durch den Verriegelungsstift festgelegt werden.

Weiter bevorzugt ist ein Erdungsanschluss vorgesehen, welcher eine nicht rotationssymmetrische Ausnehmung aufweist. In diese greift der Verriegelungsstift, wenn er in das Statorgehäuse eingesetzt ist ein, wobei die Ausnehmung im Querschnitt in einer ersten Richtung eine Breite aufweist, welche größer als die Ausdehnung des Verriegelungsstiftes in der ersten Durchmesserrichtung ist und in einer zweiten Richtung eine Breite aufweist, welche kleiner als die Ausdehnung des Verriegelungsstiftes in der ersten Durchmesserrichtung und größer als die Ausdehnung des Verriegelungsstiftes in der zweiten Durchmesserrichtung ist. Auf diese Weise wird beim Verdrehen des Verriegelungsstiftes zum Fixieren des Stators in dem Statorgehäuse der Verriegelungsstift auch in der Ausnehmung des Erdungsanschlusses bzw. Erdungskontaktes gedreht, so dass der größere Durchmesser des Verriegelungsstiftes entlang der kleineren Breite der Ausnehmung zu liegen kommt. Somit kommt es zu einem Verklemmen und damit einer sicheren Kontaktierung zwischen Verriegelungsstift und Ausnehmung. Der Verriegelungsstift wird somit zum einen mechanisch an dem Erdungsanschluss festgelegt und gleichzeitig elektrisch kontaktiert. Für die elektrische Kontaktierung an dem Erdungsanschluss und den mechanischen Fixierung des Stators in dem Statorgehäuse können unterschiedliche axiale Abschnitte des Verriegelungsstiftes zuständig sein, welche unterschiedlich große Querschnitte aufweisen können. Wenn in beiden Abschnitten eine Ausgestaltung mit einem größeren und einem kleineren Durchmesser, wie oben beschrieben, gewählt ist, können die absoluten Werte der Ausdehnung in der ersten Durchmesserrichtung und der zweiten Durchmesserrichtung in den beiden Abschnitten voneinander abweichen, die Winkellagen der ersten Durchmesserrichtung und der zweiten Durchmesserrichtung sollten jedoch vorzugsweise in beiden Abschnitten gleich sein.

Gemäß einer weiteren bevorzugten Ausführungsform kann das Verriegelungselement thermisch leitend mit einem Temperatursensor verbunden sein. Dies kann eine direkte Verbindung oder auch eine indirekte Verbindung über weitere Elemente, beispielsweise den Erdungsanschluss oder Erdungskontakt sein. Das Verriegelungselement überträgt dann die Temperatur in dem Stator zu einem Temperatursensor, welcher in dem Klemmenkasten, bevorzugt in Verbindung mit dem Erdungsanschluss angeordnet sein kann. Auf diese Weise wird die Montage des Stators vereinfacht und die Betriebssicherheit erhöht, da der Temperatursensor nicht im Stator selber, sondern mit den übrigen elektronischen Bauteilen im Klemmenkasten angeordnet werden kann.

Besonders bevorzugt ist die Statoranordnung gemäß der vorangehenden Beschreibung Teil eines Spaltrohrmotors eines Pumpenaggregates und vorzugsweise Teil eines Umwälzpumpenaggregates.

Die Erfindung betrifft darüber hinaus ein Verfahren zur Montage einer Statoranordnung für ein Pumpenaggregat gemäß der vorangehenden Beschreibung. Gemäß dem erfindungsgemäßen Verfahren wird zunächst ein Stator in axialer Richtung in ein Statorgehäuse eingeschoben. Dies kann von der Seite, welche zum Anschluss eines Pumpenaggregates vorgesehen ist, bevorzugt jedoch auch von der entgegengesetzten Axialseite her geschehen. Nachdem der Stator in axialer Richtung in dem Statorgehäuse positioniert ist, wird er anschließend mit zumindest einem Verriegelungselement in dem Statorgehäuse fixiert. Insbesondere wird dabei ein Kraftschluss zwischen Stator und Statorgehäuse durch das Verriegelungselement erzeugt. Das Verriegelungselement könnte jedoch auch zusätzlich oder alternativ zur Herstellung eines Formschlusses ausgebildet sein.

Besonders bevorzugt wird der Stator, bevor er in das Statorgehäuse eingeschoben wird, an einem axialen Ende mit einem Klemmenkasten verbunden, wobei der Stator elektrisch mit einer elektronischen Steuer- bzw. Regeleinrichtung im Inneren des Klemmenkastens verbunden wird. Das heißt, hier wird der Stator vor der Montage in dem Statorgehäuse elektrisch und mechanisch mit dem Klemmenkasten verbunden. Anschließend wird der Stator mit dem Klemmenkasten in das Statorgehäuse eingesetzt, wobei vorzugsweise der Klemmenkasten in dichtende Anlage mit einem Axialende des Statorgehäuses kommt. Eine mechanisehe Fixierung des Klemmenkastens an dem Statorgehäuse ist nicht mehr erforderlich, wenn der Klemmenkasten zuvor mechanisch mit dem Stator verbunden wird, da der Stator dann ja über das Verriegelungselement mechanisch mit dem Statorgehäuse verbunden wird, wodurch dann über den Stator auch der Klemmenkasten an dem Statorgehäuse fixiert ist. In dem Klemmenkasten können in bekannter Weise die erforderlichen elektrischen Anschlüsse zur Energieversorgung des Pumpenaggregates und elektronische Steuer- bzw. Regeleinrichtungen zum Betrieb des Motors angeordnet sein. Darüber hinaus können in dem Klemmenkasten Bedien- und Anzeigeelemente untergebracht sein.

Das Verriegelungselement, welches vorzugsweise als Verriegelungsstift, wie oben beschrieben wurde, ausgebildet ist, wird bevorzugt in das Statorgehäuse eingesetzt, nachdem der Stator in das Statorgehäuse eingeschoben wurde. Dabei tritt das Verriegelungselement dann vorzugsweise gleichzeitig mit einem Erdungsanschluss in dem Klemmenkasten in Eingriff, so dass neben der mechanischen Verbindung zwischen Stator und Statorgehäuse auch eine elektrische Verbindung zu einem Erdungsanschluss in dem Klemmenkasten hergestellt werden kann.

Der Verriegelungsstift wird vorzugsweise von der dem Klemmenkasten abgewandten Axialseite, welche diejenige Axialseite ist, welche zur Verbindung mit einem Pumpenaggregat vorgesehen ist, in das Statorgehäuse eingesetzt, so dass der Verriegelungsstift sich parallel zur Längsachse des Stators zwischen Stator und Statorgehäuse entlang in dem Klemmenkasten erstreckt. Das heißt, der Verriegelungsstift erstreckt sich vorzugsweise über die gesamte axiale Länge des Statorgehäuses. Auf diese Weise kann über die gesamte Axiallänge des Statorgehäuses eine Klemmkraft zur Verriegelung zwischen Stator und Statorgehäuse erzeugt werden, so dass der Stator über seine gesamte Länge kraftschlüssig in dem Statorgehäuse fixiert werden kann.

Das Verriegelungselement wird zunächst in Richtung seiner Längsachse in das Statorgehäuse eingesetzt und dann anschließend um seine Längsachse aus einer gelösten in eine verriegelte Position gedreht, in der es dann den Stator in dem Statorgehäuse fixiert und vorzugsweise fest mit einem Erdungskontakt in dem Klemmenkasten in Eingriff tritt. Dazu kann das Verriegelungselement als Verriegelungsstift gemäß der obigen Beschreibung ausgebildet sein. In der gelösten Position ist das Verriegelungselement vorzugsweise in axialer Richtung frei in dem Statorgehäuse und gegebenenfalls dem Erdungsanschluss bewegbar, so dass es leicht in das Statorgehäuse eingesetzt werden kann. Durch Verdrehen in die verriegelte Position tritt das Verriegelungselement dann vorzugsweise kraft- und /oder formschlüssig mit Stator und Statorgehäuse sowie gegebenenfalls dem Erdungsanschluss in Eingriff, so dass es zum einen den Stator mechanisch in dem Statorgehäuse, vorzugsweise kraftschlüssig, fixiert und zum anderen fest mit dem Erdungsanschluss in Eingriff tritt. Auf diese Weise wird gleichzeitig eine sichere elektrische Kontaktierung zur Erdung erreicht.

Bevorzugt bildet das vorangehend beschriebene Verfahren zur Montage einer Statoranordnung Teil eines Verfahrens zur Herstellung eines Pumpenaggregates, insbesondere eines Umwälzpumpenaggregates, wie eines Heizungs- Umwälzpumpenaggregates. Nach der Montage der Statoranordnung in der oben beschriebenen Weise wird diese dann mit einem Rotor, einem Spaltrohr und einem Pumpengehäuse sowie gegebenenfalls weiteren Bauteilen zusammengesetzt.

Nachfolgend wird die Erfindung beispielhaft anhand der beigefügten Figuren beschrieben. In diesen zeigt:

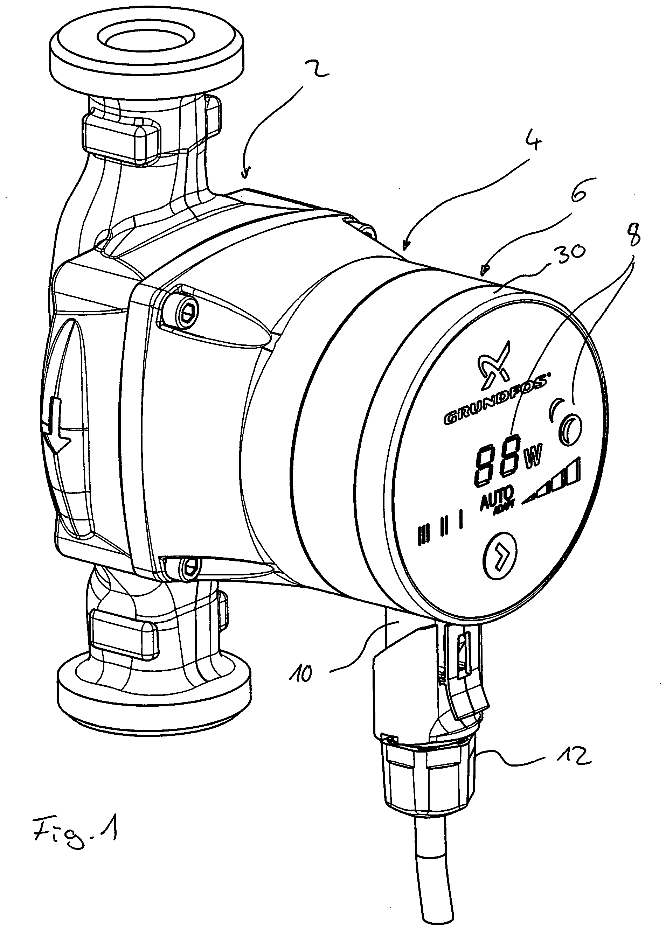

- Fig. 1: eine perspektivische Gesamtansicht eines Pumpenaggregates mit einer erfindungsgemäß aufgebauten Statoranordnung,

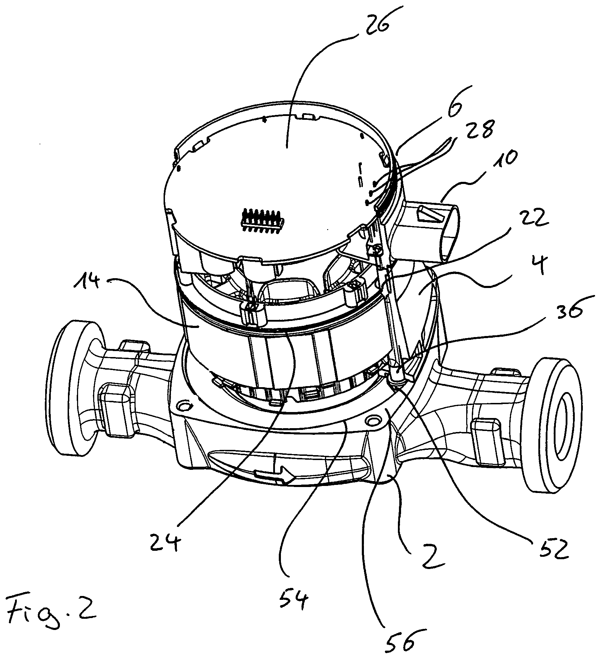

- Fig. 2: eine perspektivische, teilweise geschnittene Ansicht des Pumpenaggregates gemäß Fig. 1,

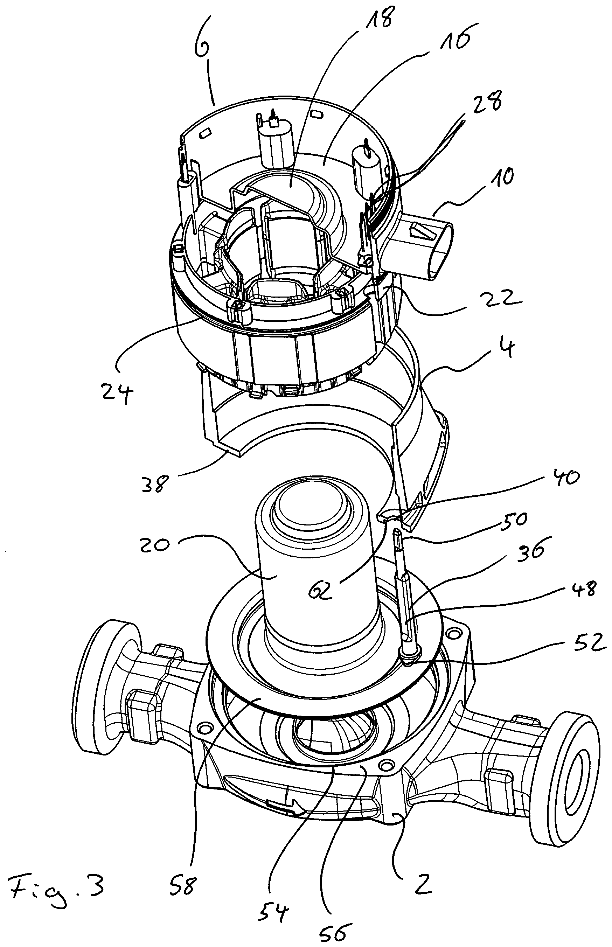

- Fig. 3: eine teilweise geschnittene Explosionsansicht des Pumpenaggregates gemäß Fig. 2,
- Fig. 4: eine teilweise geschnittene Gesamtansicht des Pumpenaggregates entsprechend Fig. 2 mit aus dem Klemmenkasten entnommener Leiterplatte,

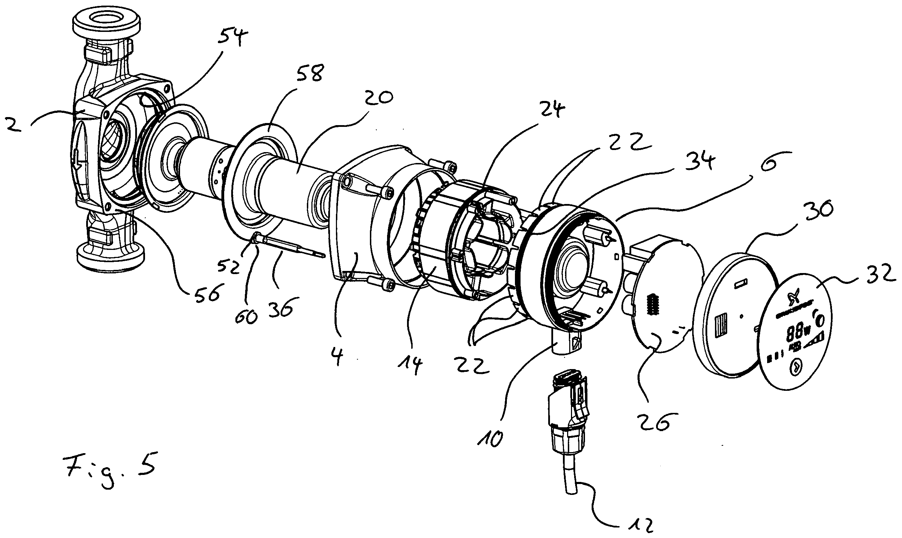

- Fig. 5: eine Explosionsansicht des Pumpenaggregates gemäß Figuren 1 bis 4,

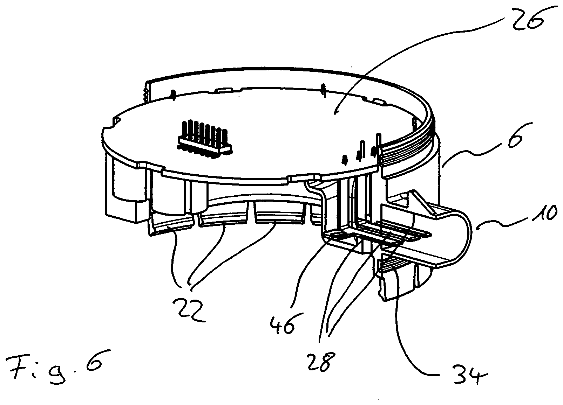

- Fig. 6: eine teilweise geschnittene Ansicht des Klemmenkastens des Pumpenaggregates gemäß Figuren 1 bis 5,

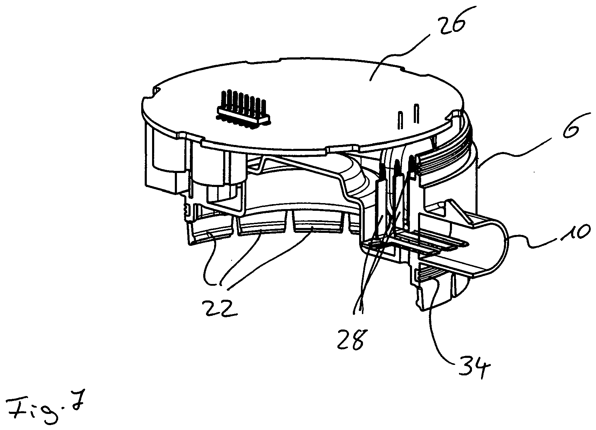

- Fig. 7: eine Ansicht entsprechend Fig. 6 mit angehobener Leiterplatte,

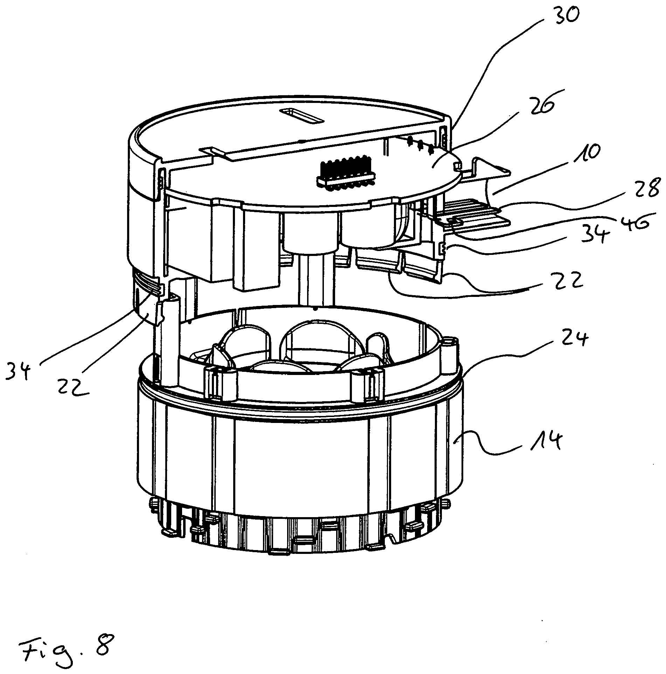

- Fig. 8: eine perspektivische Ansicht des Stators mit dem Klemmenkasten in teilweise geschnittener Ansicht während des Zusammensetzens,

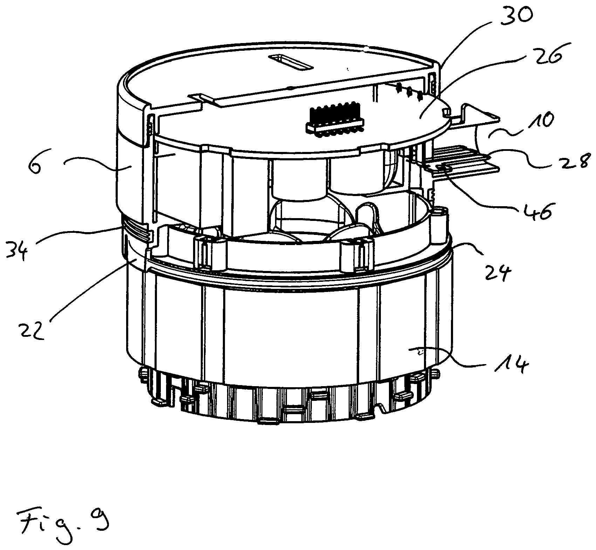

- Fig. 9: Stator und Klemmenkasten gemäß Fig. 8 im zusammengesetzten Zustand,
- Fig. 10: eine teilweise geschnittene Explosionsansicht der Statoranordnung des Pumpenaggregates gemäß der Figuren 1 bis 9,
- Fig. 11: die Statoranordnung gemäß Fig. 10 im zusammengesetzten Zustand in teilweise geschnittener Ansicht und
- Fig. 12 und 13: den Verriegelungsstift in perspektivischer Ansicht von zwei Seiten her gesehen.

Das nachfolgend beschriebene und in den Figuren gezeigte erfindungsgemäße Pumpenaggregat bzw. Pumpenaggregat mit einer erfindungsgemäßen Statoranordnung 13 weist als wesentliche Teile ein Pumpengehäuse 2 und ein Statorgehäuse 4 auf. In dem Statorgehäuse 4 ist der elektrische Antriebsmotor angeordnet. In dem Pumpengehäuse 2 das Laufrad der Pumpe. Ferner sind in dem Pumpengehäuse 2 in bekannter Weise die Rohrleitungsanschlüsse ausgebildet. Das Pumpengehäuse 2 ist an einem ersten Axialende an das Statorgehäuse 4 angesetzt bzw. an diesen mit Schrauben befestigt. An der axial entgegengesetzten Seite des Statorgehäuses 4 ist stirnseitig ein Klemmenkasten 6 angeordnet, welcher im gezeigten Beispiel kreisförmig ist und denselben Außendurchmesser wie das ihm zugewandte stirnseitige Ende des Statorgehäuses 4 aufweist, so dass hier ein harmonischer Übergang geschaffen wird. Der Klemmenkasten 6 weist stirnseitig Bedien- und Anzeigeelemente 8 und am Außenumfang einen an sich radial erstreckenden Anschlussstecker 10 auf. Der Anschlussstecker 10 dient zum Anschluss eines Anschlusskabels 12, welches das Pumpenaggregat mit elektrischer Energie versorgt.

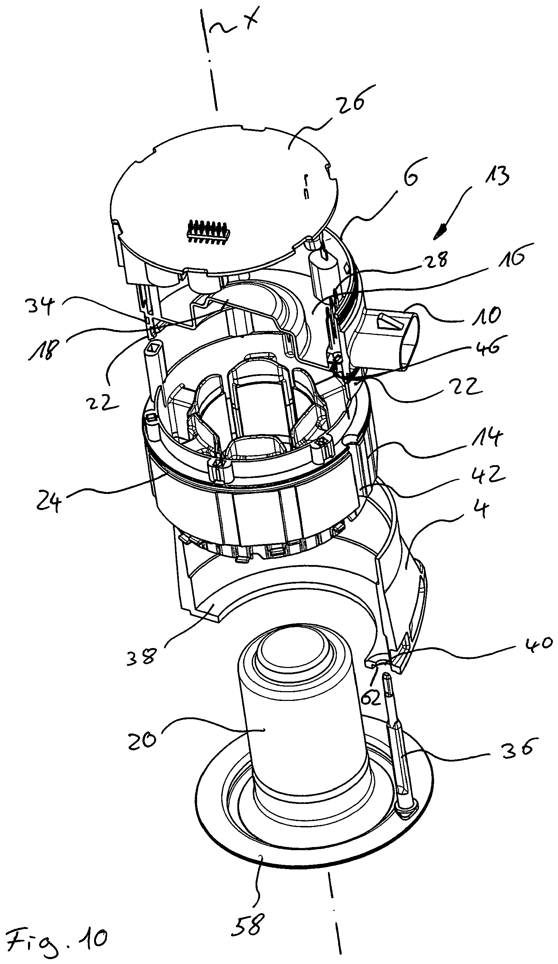

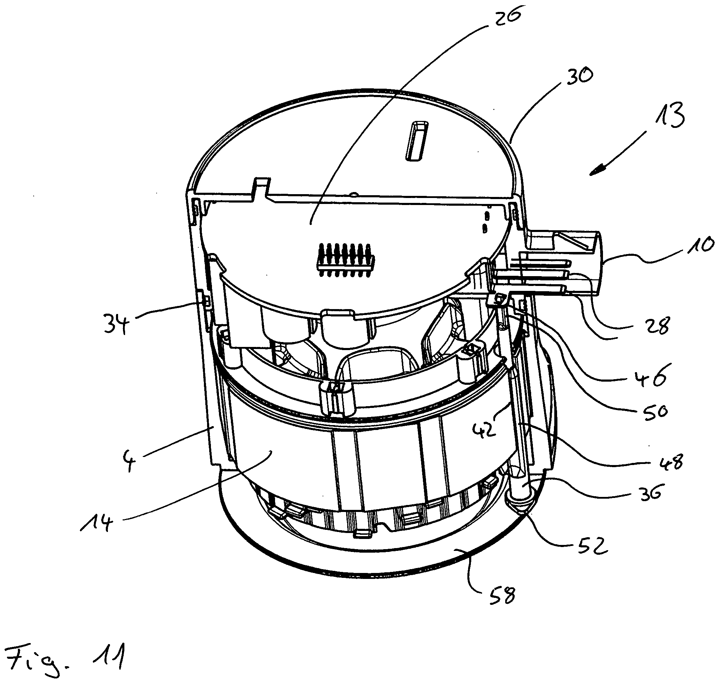

Erfindungsgemäß bildet das Statorgehäuse 4 Teil einer Statoranordnung 13, wie sie beispielsweise in den Figuren 10 und 11 im Detail gezeigt ist.

Wesentliche Bestandteile der Statoranordnung 13 sind das Statorgehäuse 4 und der darin angeordnete Stator 14. Der Stator 14 besteht in üblicher Weise aus einem Statorkern, einem Wicklungsträger und darauf angeordneten Statorwicklungen, welche in dem beigefügten Figuren nicht gezeigt sind.

In dem gezeigten Beispiel ist der Klemmenkasten 6 mit dem Stator 14 vor dem Einsetzen in das Statorgehäuse 4 mechanisch verbunden. Dabei bildet der Klemmenkasten 6 gleichzeitig den axialen Abschluss bzw. Deckel des Statorgehäuses 4, welches zu beiden Axialenden hin geöffnet ist. Das heißt, der Klemmenkasten 6 verschließt das Statorgehäuse 4 an der dem Pumpengehäuse 2 abgewandten Axialseite. Der Klemmenkasten 6 weist dazu in seinem Inneren einen Boden 16 auf, welcher Zentral eine Ausstülpung 18 aufweist, welche an ihre dem Stator 14 zugewandten Seite zur Aufnahme des Spaltrohres 20 mit einem darin angeordneten Rotorlager, welches hier nicht gezeigt ist, dient. Der Klemmenkasten 6 und insbesondere dessen Boden 16 dient somit auch der Lagerung des Rotors in dem Stator 14 und dem Statorgehäuse 4.

Zur Verbindung mit dem Stator 14 weist der Klemmenkasten 6 an seiner dem Stator 14 zugewandten Seite eine umfängliche, ringförmige Anordnung von Rastelementen 22 auf, welche mit einer korrespondierend angeordneten umfänglichen Nut 24 an dem Stator 14 rastend in Eingriff treten. Die Rastelemente 22, welche als sich parallel zur Statorlängsachse erstreckende Rastzungen mit radial nach innen gerichteten Rastvorsprüngen ausgebildet sind, schaffen somit eine formschlüssige Verbindung zwischen Stator 14 und Klemmenkasten 6. Die dem Stator 14 abgewandte Seite des Klemmenkastens 6 ist hohl bzw. topfförmig ausgebildet und dient zur Aufnahme elektronischer Bauelemente zur Steuerung und/oder Regelung des Antriebsmotors bzw. des Pumpenaggregates. Diese können beispielsweise auch einen Frequenzumrichter umfassen. Diese elektronischen Bauelemente sind auf einer Leiterplatte 26 angeordnet welche in dem Klemmenkasten 6 eingesetzt wird.

Der sich radial von der Umfangswandung des Klemmenkastens 6 nach außen erstreckende Anschlussstecker 10 ist integral mit der Wandung des Klemmenkasten 6 ausgebildet, vorzugsweise einstückig mit dieser gegossen. Dabei sind die Anschlusskontakte 28 vorzugsweise direkt in das Material eingegossen. Die Anschlusskontakte 28 sind im Inneren des Klemmenkastens in axialer Richtung gerichtet, so dass, wenn die Leiterplatte 26 in den Klemmenkasten eingesetzt wird, die Anschlusskontakte 28 in entsprechender Anschlussausnehmungen in der Leiterplatte 26 eintreten und dort gleichzeitig mit entsprechenden Leiterbahnen kontaktiert werden. So wird direkt beim Einsetzen der Leiterplatte auch der elektrische Kontakt zu dem Anschlussstecker 10 hergestellt. Verschlossen wird der Klemmenkasten 6 dann stirnseitig durch einen Klemmenkastendeckel 30, auf welchem im gezeigten Beispiel noch eine Deckscheibe 32 aufgeklebt ist, welche Beschriftungen trägt.

Der Klemmenkasten kann mit der Leiterplatte 26 und dem Klemmenkastendeckel 30 vormontiert werden und in diesem vormontierten Zustand an den Stator 14 angesetzt werden, so dass die Rastelemente 22 mit den Rastvorsprüngen in die Nut 24 eintreten.

Bei dem gezeigten Beispiel erfolgt die Kontaktierung der Statorwicklungen über Steckkontakte, welche an dem Stator 14 und dem Klemmenkasten 6 ausgebildet sind. Dazu sind dem Boden 16 des Klemmenkastens 6 umfänglich verteilt Anschlussausnehmungen ausgebildet bzw. einstückig mit dem Boden 16 gegossen. In diesen Anschlussausnehmungen sind elektrischen Anschlusskontakte angeordnet bzw. eingegossen, welche sich zum einen in die dem Stator 14 zugewandte Anschlussausnehmung und zum anderen in der entgegengesetzten axialen Richtung in das Innere des Klemmenkasten 6 hineinerstrecken. Im Inneren des Klemmenkastens 6 können diese Anschlusskontakte direkt mit der Leiterplatte 26 und dort ausgebildeten Anschlussausnehmungen zur elektrischen Kontaktierung in Eingriff treten. An der axial entgegengesetzten Seite greifen Anschlussstecker, welche sich in axialer Richtung von dem Stator 14 bzw. dem Wicklungsträger des Stators 14 erstrecken in die Anschlussausnehmungen ein und treten dort mit den elektrischen Anschlusskontakten elektrisch leitend in Eingriff. Auf diese Weise kann der Klemmenkasten und die darin angeordnete Elektronik auf der Leiterplatte 26 allein durch Steckverbindungen direkt beim Zusammenfügen von Klemmenkasten 6 und Stator 14 mit den Statorwicklungen elektrisch kontaktiert werden.

Anschließend kann der so mit dem Klemmenkasten 6 verbundene Stator 14 in axialer Richtung in das Statorgehäuse 4 eingeschoben werden, was von der dem Pumpengehäuse 2 abgewandten Stirnseite des Statorgehäuses 4 erfolgt. Im eingeschobenen Zustand sind die Rastelemente 22 des Klemmenkastens im Inneren des Statorgehäuses 4 angeordnet. Das Statorgehäuse 4 kommt mit seinem seiner stirnseitigen Öffnung zugewandten Innenumfang an einer umfänglichen Dichtung 34 des Klemmenkastens zur Anlage, so dass der Klemmenkasten 6 das Statorgehäuse 4 axialseitig dicht verschießt. Dadurch, dass die Rastelemente 22 im Inneren des Statorgehäuses 4 angeordnet sind und dort vorzugsweise direkt am Innenumfang des Statorgehäuses 4 anliegen, wird verhindert, das sich die Rastelemente 22 radial nach außen bewegen können, wobei die radial nach Innen gerichteten Rastvorsprünge von der Nut 24 außer Eingriff kommen könnten. Auf diese Weise ist nach dem Einsetzen des Stators 14 mit dem Klemmenkasten 6 in das Statorgehäuse 4 die Verbindung zwischen Klemmenkasten 6 und Stator 14 durch das umgebende Statorgehäuse 4 gesichert.

Der in dem Statorgehäuse 4 angeordnete Stator 14 wird in dem Statorgehäuse 4 durch einen Verriegelungsstift 36 fixiert bzw. gesichert. Der Verriegelungsstift 36 wird von dem dem Pumpengehäuse 2 zugewandten Axialende her parallel zur Statorlängsachse X in das Statorgehäuse 4 eingesetzt. Hierzu ist in dem radial nach innen gerichteten Kragen 38 des Statorgehäuses 4 ein Loch 40 vorgesehen. Der Stator wiederum weist an seinem Außenumfang eine sich in axialer Richtung erstreckende Ausnehmung 42 zur Aufnahme des Verriegelungsstiftes 36 auf. Der eingesetzte Verriegelungsstift 36 ist aus einem elektrisch leitfähigen Material ausgebildet und erstreckt sich an dem Stator 14 entlang in dessen Nut bzw. Ausnehmung 42. Dabei erstreckt sich der Verriegelungsstift 36 über die gesamte axiale Länge des Stators 14 und darüber hinaus bis in dem Klemmenkasten 6 bzw. eine dem Stator 14 zugewandte Öffnung 44 des Klemmenkastens 6 hinein. Dort ist ein Erdungsanschluss bzw. Erdungskontakt 46, welcher mit dem Anschusskontakten 28 des Anschlusssteckers 10 in Verbindung steht bzw. integral ausgebildet ist, gelegen. Dieser Erdungsanschluss 46 weist eine Öffnung auf, in welche der Verriegelungsstift 36 mit seinem vorderen Ende eingreift. Auf diese Weise stellt der Verriegelungsstift 36 einen elektrischen Kontakt zu dem Erdungsanschluss 46 her. Da der Verriegelungsstift 36 in seinen anderen Bereichen an dem Stator 14 und dem Statorgehäuse 4 in Anlage ist, kann er somit deren Erdung sicherstellen.

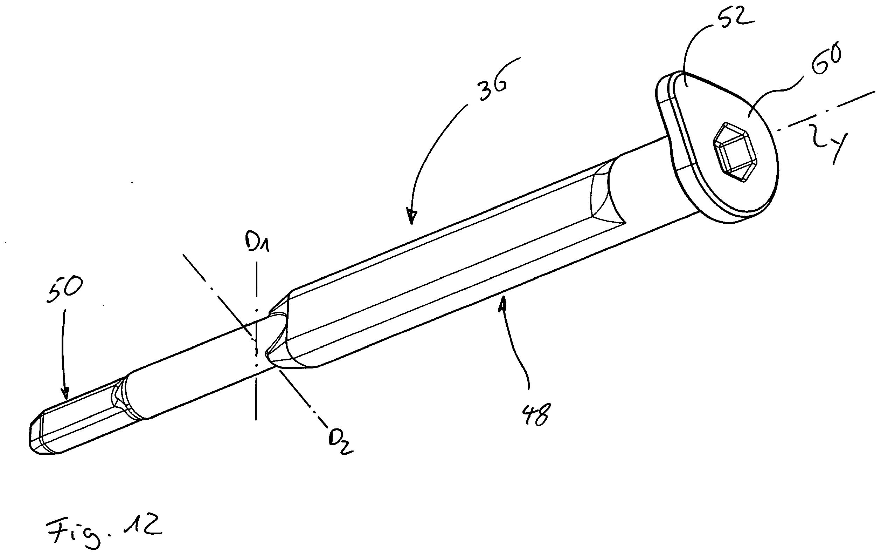

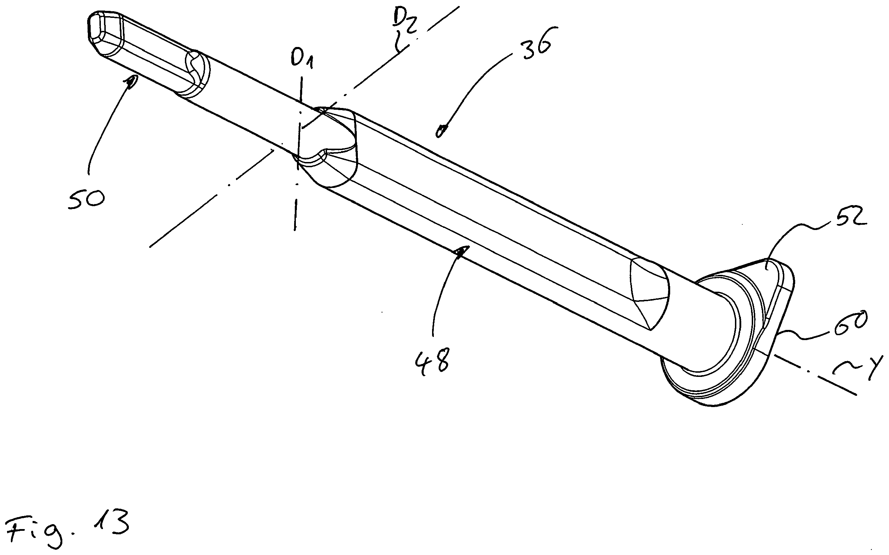

Wie in den Figuren 12 und 13 am besten zu erkennen ist, weist der Verriegelungsstift 36 zwei Verriegelungsabschnitte 48 und 50 auf, welche axial voneinander beabstandet sind. Der Abschnitt 48 dient zur Verriegelung bzw. Fixierung des Stators 14 in dem Statorgehäuse 4, der Abschnitt 50 zu Verbindung mit dem Erdungsanschluss 46. Dabei ist der Abschnitt 50 schlanker als der Abschnitt 48, d. h., mit geringerem Querschnittsfläche ausgebildet. Beiden Abschnitten 48 und 50 ist jedoch gemeinsam, das in ihnen der Querschnitt des Verriegelungsstiftes 36 derart ausgebildet ist, das er in einer ersten Durchmesserrichtung eine größere Ausdehnung aufweist als in einer zweiten um 90° versetzten Durchmesserrichtung. Die erste Durchmesserrichtung ist in den Figuren 12 und 13 durch die Achse D₁ die zweite Durchmesserrichtung durch die Achse D2 markiert.

Die Ausnehmung 42 in dem Stator 14 ist so ausgebildet, das der Verriegelungsstift 36 in die Ausnehmung 42 zunächst in der Lage eingesetzt werden kann, dass die zweite Durchmesserrichtung D₂ sich in radialer Richtung bezüglich der Statorlängsachse X erstreckt. Dazu ist die Ausnehmung 42 so ausgebildet, das sie in tangentialer bzw. Umfangsrichtung bezogen auf die Statorlängsachse X eine größere Breite aufweist als in radialer Richtung. Zur Verriegelung wird der Verriegelungsstift 36 dann um seine Längsachse Y um 90° gedreht, so dass die Durchmesserrichtung D₂ mit der größeren Querschnittsausdehnung in radialer Richtung zu liegen kommt. In dieser Richtung ist der radiale Abstand von dem Boden der Nut 42 zur Innenwandung des Statorgehäuses 4 so gewählt, das er kleiner als die Ausdehnung des Verriegelungsstiftes 36 in dem Abschnitt 48 in Richtung des Durchmessers D₁ ist. Dadurch kommt es durch Drehung des Verriegelungsstiftes 36 in die in den Figuren gezeigte Position zu einer Presspassung und einem Verklemmen bzw. Verspannen des Stators 14 im Inneren des Statorgehäuses 4. Auf diese Weise wird der Stator 14 mit dem Klemmenkasten 6 fest an dem Statorgehäuse 4 fixiert. Über die Ausnehmung 42 und das Loch 40 wird darüber hinaus die umfängliche Position des Verriegelungsstiftes 36 und damit die umfängliche Ausrichtung des Stators 14 zu dem Statorgehäuse 4 definiert festgelegt.

Die Fixierung des Abschnittes 50 des Verriegelungsstiftes 36 in dem Erdungsanschluss 46 erfolgt in entsprechender Weise. Die Öffnung in dem Erdungsanschluss 46 weist dazu eine ovale oder längliche Kontur auf, welche sich in umfängliche bzw. tangentialer Richtung bezogen auf die Statorlängsachse X erstreckt. Auf diese Weise kann der Verriegelungsstift 36 in seiner gelösten Stellung zunächst in Richtung seiner Längsachse Y in das Statorgehäuse 4 eingeschoben werden, so dass der Abschnitt 50 in die Öffnung des Erdungsanschlusses 36 eingreift. Wenn der Verriegelungsstift 36 dann wie beschrieben um 90° gedreht wird, wird auch der Bereich mit der größeren Ausdehnung in der Durchmesserrichtung D₁ in dem Abschnitt 50 radial zu der Statorlängsachse X ausgerichtet und ist somit in der Öffnung in dem Erdungsanschluss 46 in Richtung deren geringerer Breite gerichtet, so dass es hier ebenfalls zu einem Verklemmen bzw. einer Presspassung kommt. Zusätzlich kann es hierbei zu einer plastischen oder elastischen Verformung des Verriegelungsstiftes 36 und/oder des umgebenden Erdungsanschlusses 46 kommen. Die Breite der Öffnung in dem Erdungsanschluss 46 in radialer Richtung bezogen auf die Längsachse X des Stators 14 ist so gewählt, dass sie geringer als der Durchmesser des Verriegelungsstiftes 36 im Abschnitt 50 in Richtung des Durchmessers D₁ aber größer als die Ausdehnung des Verriegelungsstiftes 36 in dem Abschnitt 50 in Richtung des Durchmessers D₂ ist. Entsprechend weist die Ausnehmung bzw. die Öffnung in dem Erdungsanschluss 46 in tangentialer Richtung zu der Längsachse X eine Breite auf, welche größer ist als die Ausdehnung des Querschnittes des Verriegelungsstiftes 36 im Abschnitt 50 in Richtung des Durchmessers D₁.

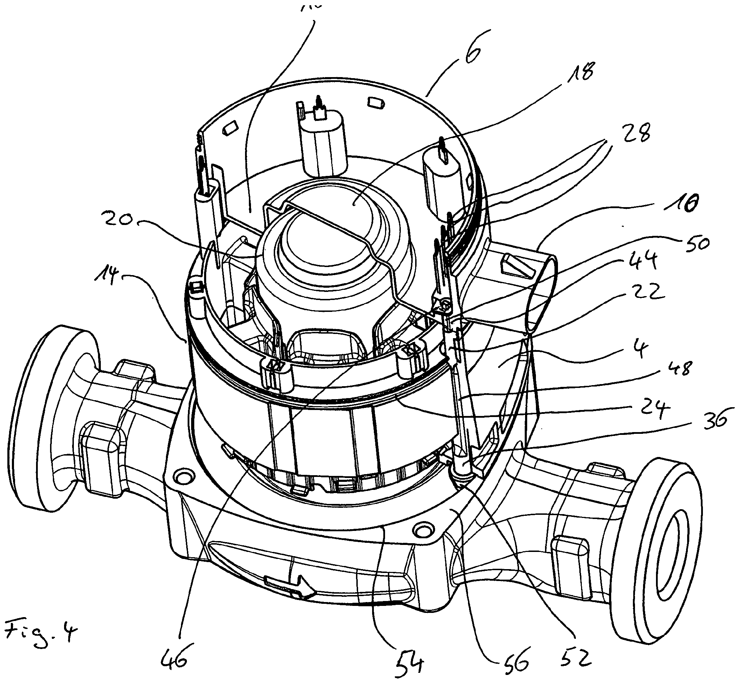

Der Verriegelungsstift 36 weist zusätzlich an seinem dem Abschnitt 50 abgewandten Axialende einen sich radial nach außen erstreckenden Nocken 52 auf, welcher als Sperrelement dient. In der verriegelten Position des Sperrelementes, welche in den Figuren gezeigt ist, ist, wie beispielsweise in Fig. 4 zu erkennen ist, der Nocken 52 so verschwenkt, dass sein freies, d. h. bezüglich der Längsachse Y radial äußeres Ende im Bereich des Innenumfanges 54 des Pumpengehäuses 2 gelegen ist. So wird es möglich, dass das Pumpengehäuse 2 mit der in der beschriebenen Weise vormontierten Statoranordnung 13 bestehend aus Statorgehäuse 4, Stator 14 und angesetzten Klemmenkasten 6 mit dem Pumpengehäuse 2 verbunden wird. Befindet sich der Verriegelungsstift 36 jedoch in seiner gelösten Position, d. h. in einer um 90° bezüglich seiner Längsachse Y gedrehten Stellung, ist der Nocken 52 nach außen verschwenkt, d. h. bezüglich der Statorlängsachse X radial weiter nach außen gerichtet und steht mit seinem freien Ende über den Innenumfang 54 des Pumpengehäuses 2 über. Dies bedeutet, das in dieser Stellung des Verriegelungsstiftes 36 das Statorgehäuse 4 nicht vollständig in das Pumpengehäuse 2 eingesetzt bzw. vollständig an das Pumpengehäuse 2 angesetzt werden kann, da der Nocken 52 zunächst mit der Stirnfläche 56 des Pumpengehäuses 2 zur Anlage kommen würde. Auf diese Weise wird sichergestellt, dass Statorgehäuse 4 und Pumpengehäuse 2 erst montiert werden können, wenn sich der Verriegelungsstift 36 in seiner verriegelten Position befindet, d. h. die Statoranordnung 13 korrekt vormontiert ist.

Eine weitere Sicherung der vollständigen Montage des Pumpenaggregates wird dadurch erreicht, dass für den Fall, das der Verriegelungsstift 36 in Richtung seiner Längsachse Y nicht vollständig in das Statorgehäuse 4 eingesetzt sein sollte, das Spaltrohr 20 nicht vollständig in das Statorgehäuse 4 bzw. die Statoranordnung 13 eingesetzt werden kann. Dann würde nämlich der Kragen 58 des Spaltrohres 20, welcher sich in radialer Richtung nach außen erstreckt, gegen den axial aus dem Kragen 38 vorstehenden Kopf 60 des Verriegelungsstiftes 36 anstoßen. Im korrekt montierten Zustand ist der Kopf 60, welcher im gezeigten Beispiel einen Innensechskant zum Drehen des Verriegelungsstiftes 36 aufweist, vollständig in einer entsprechenden Vertiefung in dem Kragen 38 des Statorgehäuses 4 versenkt, so dass der Kragen 58 des Spaltrohres 20 flächig an der dem Pumpengehäuse 2 zugewandten Oberfläche des Kragens 38 zur Anlage kommen kann.

Wenn der Verriegelungsstift 36 aus Metal oder auf andere Weise thermisch leitend ausgebildet wird, kann er noch eine weitere Funktion im Zusammenhang mit einem in dem Klemmenkasten 6 vorzugsweise an dem Erdungskontakt 46 angebrachten Temperatursensor übernehmen. Der Verriegelungsstift 36 leitet dann nämlich die Wärme aus dem Stator 14 zu dem Erdungskontakt 46 und damit zu einem an diesem angebrachten Temperatursensor. Dieser Temperatursensor kann dann die Temperatur im Inneren des Statorgehäuses 4, d. h. die Statortemperatur erfassen und überwachen.

### Bezugszeichenliste

- 2: - Pumpengehäuse
- 4: - Statorgehäuse
- 6: - Klemmenkasten
- 8: - Bedien- und Anzeigenelement
- 10: - Anschlussstecker
- 12: - Anschlusskabel
- 13: - Statoranordnung
- 14: - Stator
- 16: - Boden
- 18: - Ausstülpung
- 20: - Spaltrohr
- 22: - Rastelemente
- 24: - umfängliche Nut
- 25: - Rastvorsprünge
- 26: - Leiterplatte
- 28: - Anschlusskontakte
- 30: _ Klemmenkastendeckel
- 32: - Deckscheibe
- 34: - Dichtung
- 36: - Verriegelungsstift
- 38: - Kragen
- 40: - Loch
- 42: - Ausnehmung
- 44: - Öffnung
- 46: - Erdungsanschluss
- 48, 50: - Abschnitte
- 52: - Nocken
- 54: - Innenumfang
- 56: - Stirnfläche
- 58: - Kragen
- 60: - Kopf
- D₁, D₂: - Durchmesserrichtungen
- X: - Statorlängsachse
- Y: - Längsachse des Verriegelungsstiftes 36

## Patentansprüche

1. Statoranordnung für ein Pumpenaggregat, welche ein Statorgehäuse (4) und einen darin angeordneten elektrischen Antriebsmotor mit einem Stator (14), sowie
zumindest ein Verriegelungselement (36) aufweist, mittels welchem der Stator (14) in dem Statorgehäuse (4) fixierbar ist,
wobei das Verriegelungselement als Verriegelungsstift (36) ausgebildet ist, das Verriegelungselement (36) sich zwischen dem Außenumfang des Stators (14) und dem Innenumfang des Statorgehäuses (4) erstreckt und das Verriegelungselement (36) in der Statoranordnung (13) durch Drehen von einer gelösten Position, in welcher der Stator (14) in dem Statorgehäuse (4) bewegbar ist, in eine verriegelte Position bewegbar ist, in welcher der Stator (14) in dem Statorgehäuse (4) fixiert ist,
**dadurch gekennzeichnet, dass**
der Verriegelungsstift (36) zumindest in einem Abschnitt (48, 50) seiner axialen Erstreckung (Y) einen Querschnitt aufweist, welcher in einer ersten Durchmesserrichtung (D₁) eine größere Ausdehnung aufweist als in einer zweiten, sich abgewinkelt zu der ersten Durchmesserrichtung (D₁) erstreckenden Durchmesserrichtung (D₂).

2. Statoranordnung nach Anspruch 1, **dadurch gekennzeichnet, dass** am Außenumfang des Stators (14) und/oder am Innenumfang des Statorgehäuses (4) eine Ausnehmung (42) ausgebildet ist, in welche das Verriegelungselement (36) eingesetzt ist.

3. Statoranordnung nach Anspruch 1 oder 2, **dadurch gekennzeichnet, dass** an dem Verriegelungselement (36) ein Sperrelement (52) ausgebildet ist, welches durch Bewegung des Verrieglungselementes (36) von dessen gelöster in dessen verriegelte Position aus einer Sperrposition in eine Freigabeposition bewegbar ist, wobei in der Sperrposition durch das Sperrelement (52) die Anbringung weiterer Komponenten eines Pumpenaggregates an der Statoranordnung (13) blockiert wird.

4. Statoranordnung nach einem der vorangehenden Ansprüche, **dadurch gekennzeichnet, dass** das Verriegelungselement (36) als Klemmelement ausgebildet ist, welches eine kraftschlüssige Verbindung zwischen dem Stator (14) und dem Statorgehäuse (4) bewirkt.

5. Statoranordnung nach einem der vorangehenden Ansprüche, **dadurch gekennzeichnet, dass** an dem Statorgehäuse (4) ein Klemmenkasten (6) angeordnet ist, wobei das Verriegelungselement (36) elektrisch leitend ausgebildet ist und eine elektrisch leitende Verbindung zwischen einem Erdungsanschluss (46) in dem Klemmenkasten und dem Stator (14) und/oder dem Statorgehäuse (4) bildet.

6. Statoranordnung nach einem der vorangehenden Ansprüche, **dadurch gekennzeichnet, dass** das Verriegelungselement (36) von einer Stirnseite des Statorgehäuses (4) her in das Statorgehäuse (4) eingesetzt ist.

7. Statoranordnung nach einem der vorangehenden Ansprüche, **dadurch gekennzeichnet, dass** der Verriegelungsstift (36) sich parallel zur Längsachse (X) des Stators (14) erstreckt.

8. Statoranordnung nach einem der vorangehenden Ansprüche, **dadurch gekennzeichnet, dass** der Verriegelungsstift (36) sich ausgehend von einer ersten Stirnseite des Statorgehäuses (4), welche zur Verbindung mit einem Pumpengehäuse (2) ausgebildet ist, in einen an der entgegengesetzten Stirnseite des Statorgehäuses (4) angeordneten Klemmenkasten (6) hinein erstreckt.

9. Statoranordnung nach einem der vorangehenden Ansprüche, **dadurch gekennzeichnet, dass** zwischen dem Stator (14) und dem Statorgehäuse (4) eine Ausnehmung (42) ausgebildet ist, in welcher der Verriegelungsstift (36) angeordnet ist, wobei die Ausnehmung (42) in radialer Richtung bezogen auf die Längsachse (X) des Stators (14) eine Breite aufweist, welche kleiner als die Ausdehnung des Verriegelungsstiftes (36) in der ersten Durchmesserrichtung (D₁) und größer als die Ausdehnung des Verriegelungsstiftes (36) in der zweiten Durchmesserrichtung (D₂) ist.

10. Statoranordnung nach einem der vorangehenden Ansprüche, **dadurch gekennzeichnet, dass** ein Erdungsanschluss (46) vorgesehen ist, welcher eine nicht rotationssymmetrische Ausnehmung aufweist, in welche der Verriegelungsstift (36) eingreift, wobei die Ausnehmung im Querschnitt in einer ersten Richtung eine Breite aufweist, welche größer als die Ausdehnung des Verriegelungsstiftes (36) in der ersten Durchmesserrichtung (D₁) ist, und in einer zweiten Richtung eine Breite aufweist, welche kleiner als die Ausdehnung des Verriegelungsstiftes (36) in der ersten Durchmesserrichtung (D₁) und größer als die Ausdehnung des Verriegelungsstiftes (36) in der zweiten Durchmesserrichtung (D₂) ist.

11. Statoranordnung nach einem der vorangehenden Ansprüche, **dadurch gekennzeichnet, dass** das Verriegelungselement (36) thermisch leitend mit einem Temperatursensor verbunden ist.

12. Pumpenaggregat mit einem Spaltrohrmotor, welcher eine Statoranordnung nach einem der vorangehenden Ansprüche aufweist.

13. Verfahren zur Montage einer Statoranordnung (13) nach einem der Ansprüche 1-11, bei welchem zunächst ein Stator (14) eines elektrischen Antriebsmotors in axialer Richtung (X) in ein Statorgehäuse (4) eingeschoben wird und anschließend der Stator (14) mit einem Verriegelungselement (36) in dem Statorgehäuse (4) fixiert wird, indem das Verriegelungselement (36) zunächst in Richtung seiner Längsachse (Y) zwischen Außenumfang des Stators und Innenumfang des Statorgehäuses in das Statorgehäuse (4) eingesetzt wird und anschließend um diese Längsachse (Y) aus einer gelösten in eine verriegelte Position gedreht wird, in der es den Stator (14) in dem Statorgehäuse (4) fixiert.

14. Verfahren nach Anspruch 13, bei welchem der Stator (14), bevor er in das Statorgehäuse (4) eingeschoben wird, an einem axialen Ende mit einem Klemmenkasten (6) verbunden wird, wobei der Stator (14) elektrisch mit einer elektronischen Steuer- bzw. Regeleinrichtung (26) im Inneren des Klemmenkastens (6) verbunden wird.

15. Verfahren nach Anspruch 14, bei welchem das Verriegelungselement (36) nach dem Einschieben des Stators (14) in das Statorgehäuse (4) in das Statorgehäuse (4) eingesetzt wird, wobei das Verriegelungselement (36) mit einem Erdungsanschluss (46) in dem Klemmenkasten (6) in Eingriff tritt.

16. Verfahren nach Anspruch 15, bei welchem das Verriegelungselement als Verriegelungsstift ausgebildet ist und der Verriegelungsstift (36) von der dem Klemmenkasten (6) abgewandten Axialseite her in das Statorgehäuse (4) eingesetzt wird, so dass der Verriegelungsstift (36) sich parallel zur Längsachse (X) des Stators (14) zwischen Stator (14) und Statorgehäuse (4) entlang in den Klemmenkasten (6) erstreckt.

17. Verfahren zum Herstellen eines Pumpenaggregates, bei welchem eine Statoranordnung des Pumpenaggregates mittels eines Verfahrens nach einem der Ansprüche 13 bis 16 montiert wird, und nach der Montage der Statoranordnung (13) diese mit einem Rotor, einem Spaltrohr und einem Pumpengehäuse (2) zusammengesetzt wird.

## Claims

1. A stator arrangement for a pump assembly, said arrangement comprising a stator housing (4), an electrical drive motor which is arranged therein and which has a stator (14), as well as at least one locking element (36), by way of which locking element the stator (4) is fixable in the stator housing (14), wherein the locking element is designed as a locking pin (36), the locking element (36) extends between the outer periphery of the stator (14) and the inner periphery of the stator housing (4) and the locking element (36) in the stator arrangement (13) is movable by way of rotation from a released position, in which the stator (14) is movable in the stator housing (4), into a locked position, in which the stator (14) is fixed in the stator housing (4), **characterised in that** the locking pin (36) at least in a section (48, 50) of its axial extension (Y) has a cross section which in a first diameter direction (D1) has a larger extension than in a second diameter direction (D₂) which extends in an angled manner to the first diameter direction (D₁).

2. A stator arrangement according to claim 1, **characterised in that** a recess (42), into which the locking element (36) is inserted is formed on the outer periphery of the stator (14) and/or on the inner periphery of the stator housing (4).

3. A stator arrangement according to claim 1 or 2, **characterised in that** a blocking element (52) is formed on the locking element (36), said blocking element able to be moved from a blocking position into a release position by way of movement of the locking element (36) from its released into its locked position, wherein the attachment of further components of a pump assembly to the stator arrangement (13) is blocked in the blocking position by the blocking element (52).

4. A stator arrangement according to one of the preceding claims, **characterised in that** the locking element (36) is designed as a clamping element which effects a non-positive connection between the stator (14) and the stator housing (4).

5. A stator arrangement according to one of the preceding claims, **characterised in that** a terminal box (6) is arranged on the stator housing (4), wherein the locking element (36) is designed in an electrically conductive manner and forms an electrically conductive connection between an earth connection (46) in the terminal box and the stator (14) and/or the stator housing (4).

6. A stator arrangement according to one of the preceding claims, **characterised in that** the locking element (36) is inserted into the stator housing (4) from a face side of the stator housing (4).

7. A stator arrangement according to one of the preceding claims, **characterised in that** the locking pin (36) extends parallel to the longitudinal axis (X) of the stator (14).

8. A stator arrangement according to one of the preceding claims, **characterised in that** the locking pin (36), departing from a first face side of the stator housing (4) which is designed for connection to a pump housing (2), extends into a terminal box (6) which is arranged on the opposite face side of the stator housing (4).

9. A stator arrangement according to one of the preceding claims, **characterised in that** a recess (42) is formed between the stator (14) and the stator housing (4), in which recess the locking pin (36) is arranged, wherein the recess (42) in the radial direction with respect to the longitudinal axis (X) of the stator (14) has a width which is smaller than the extension of the locking pin (36) in the first diameter direction (D1) and larger than the extension of the locking pin (36) in the second diameter direction (D₂).

10. A stator arrangement according to one of the preceding claims, **characterised in that** an earth connection (46) is provided, said earth connection having a recess which is not rotationally symmetrical and into which the locking pin (36) engages, wherein the recess in cross section has a width in a first direction which is larger than the extension of the locking pin (36) in the first diameter direction (Di), and in a second direction has a width which is smaller than the extension of the locking pin (36) in the first diameter direction (D₁) and larger than the extension of the locking pin (36) in the second diameter direction (D₂).

11. A stator arrangement according to one of the preceding claims, **characterised in that** the locking element (36) is thermally conductively connected to a temperature sensor.

12. A pump assembly with a canned motor which comprises a stator arrangement according to one of the preceding claims.

13. A method for the assembly of a stator arrangement (13) according to one of the claims 1-11, concerning which a stator (14) of an electrical drive motor is firstly inserted into a stator housing (4) in the axial direction (X) and subsequently the stator (14) is fixed in the stator housing (4) by a locking element (36), by way of the locking element (36) firstly being inserted in the direction of its longitudinal axis (Y) into the stator housing between the outer periphery of the stator housing and the inner periphery of the stator housing and subsequently being rotated about this longitudinal axis (Y) from a released into a locked position, in which it fixes the stator (14) in the stator housing (4).

14. A method according to claim 13, concerning which the stator (14), before it is inserted into the stator housing (4), is connected at an axial end to a terminal box (6), wherein the stator (14) is electrically connected to an electronic control and regulation device (26) in the inside of the terminal box (6).

15. A method according to claim 14, concerning which the locking element (36) is inserted into the stator housing (4) after the insertion of the stator (14) into the stator housing (4), wherein the locking element (36) comes into engagement with an earth connection (46) in the terminal box (6).

16. A method according to claim 15, concerning which the locking element is designed as a locking pin (36) and the locking pin (36) is inserted into the stator housing (4) from the axial side which is away from the terminal box (6), so that the locking pin (36) extends parallel to the longitudinal axis (X) of the stator (14) along and between the stator (14) and the stator housing (4) into the terminal box (6).

17. A method for manufacturing a pump assembly, concerning which a stator arrangement of the pump assembly is assembled by way of a method according to one of the claims 13 to 16, and after the assembly of the stator arrangement (13) this is put together with a rotor, a can and a pump housing (2).

## Revendications

1. Ensemble stator pour groupe motopompe, comprenant un carter de stator (4) et un moteur d'entraînement électrique disposé à l'intérieur et équipé d'un stator (14), ainsi qu'au moins un élément de verrouillage (36) permettant de fixer le stator (14) dans le carter de stator (4), dans lequel l'élément de verrouillage est réalisé sous la forme d'un axe de verrouillage (36), l'élément de verrouillage (36) s'étend entre la périphérie extérieure du stator (14) et la périphérie intérieure du carter de stator (4) et l'élément de verrouillage (36) peut être déplacé dans l'ensemble stator (13) par rotation depuis une position libérée, dans laquelle le stator (14) est mobile dans le carter de stator (4), vers une position verrouillée, dans laquelle le stator (14) est fixé dans le carter de stator (4), **caractérisé en ce que** l'axe de verrouillage (36) présente, au moins dans un segment (48, 50) de son étendue axiale (Y), une section transversale qui, dans une première direction diamétrale (D₁), a une étendue plus grande que dans une seconde direction diamétrale (D₂) s'étendant en formant un angle par rapport à la première direction diamétrale (D₁).

2. Ensemble stator selon la revendication 1, **caractérisé en ce qu'**est formé sur la périphérie extérieure du stator (14) et/ou sur la périphérie intérieure du carter de stator (4) un évidement (42) dans lequel est inséré l'élément de verrouillage (36).

3. Ensemble stator selon la revendication 1 ou 2, **caractérisé en ce qu'**est formé au niveau de l'élément de verrouillage (36) un élément de blocage (52) qui, par le mouvement de l'élément de verrouillage (36) de sa position libérée vers sa position verrouillée, peut être déplacé depuis une position de blocage vers une position de libération, auquel cas, dans la position de blocage, le montage d'autres composants d'un groupe motopompe sur l'ensemble stator (13) est bloqué par l'élément de blocage (52).

4. Ensemble stator selon l'une des revendications précédentes, **caractérisé en ce que** l'élément de verrouillage (36) est réalisé sous la forme d'un élément de serrage qui génère une liaison par transmission d'efforts entre le stator (14) et le carter de stator (4).

5. Ensemble stator selon l'une des revendications précédentes, **caractérisé en ce qu'**une boîte à bornes (6) est disposée au niveau du carter de stator (4), l'élément de verrouillage (36) étant conçu de manière électriquement conductrice et formant une liaison électro-conductrice entre une prise de terre (46) dans la boîte à bornes et le stator (14) et/ou le carter de stator (4).

6. Ensemble stator selon l'une des revendications précédentes, **caractérisé en ce que** l'élément de verrouillage (36) est inséré dans le carter de stator (4) à partir d'une face avant du carter de stator (4).

7. Ensemble stator selon l'une des revendications précédentes, **caractérisé en ce que** l'axe de verrouillage (36) s'étend parallèlement à l'axe longitudinal (X) du stator (14).

8. Ensemble stator selon l'une des revendications précédentes, **caractérisé en ce que** l'axe de verrouillage (36) s'étend depuis une première face avant du carter de stator (4), qui est adaptée pour être raccordée à un carter de pompe (2), jusque dans une boîte à bornes (6) disposée sur la face avant opposée du carter de stator (4).

9. Ensemble stator selon l'une des revendications précédentes, **caractérisé en ce qu'**en ce qu'est formé entre le stator (14) et le carter de stator (4) un évidement (42) dans lequel est disposé l'axe de verrouillage (36), l'évidement (42) présentant, dans la direction radiale rapportée à l'axe longitudinal (X) du stator (14), une largeur qui est plus petite que l'étendue de l'axe de verrouillage (36) dans la première direction diamétrale (D₁) et plus grande que l'étendue de l'axe de verrouillage (36) dans la seconde direction diamétrale (D₂).

10. Ensemble stator selon l'une des revendications précédentes, **caractérisé en ce qu'**est prévue une prise de terre (46) qui comporte un évidement non symétrique en rotation, dans lequel s'engage l'axe de verrouillage (36), l'évidement présentant, en section transversale, dans une première direction, une largeur qui est plus grande que l'étendue de l'axe de verrouillage (36) dans la première direction diamétrale (D₁) et présentant dans une seconde direction une largeur qui est plus petite que l'étendue de l'axe de verrouillage (36) dans la première direction diamétrale (D₁) et plus grande que l'étendue de l'axe de verrouillage (36) dans la seconde direction diamétrale (D₂).

11. Ensemble stator selon l'une des revendications précédentes, **caractérisé en ce que** l'élément de verrouillage (36) est relié de manière thermo-conductrice à un capteur de température.

12. Groupe motopompe comprenant un moteur à gaine, qui comporte un ensemble stator selon l'une des revendications précédentes.

13. Procédé de montage d'un ensemble stator (13) selon l'une des revendications 1 à 11, dans lequel un stator (14) d'un moteur d'entraînement électrique est d'abord inséré en direction axiale (X) dans un carter de stator (4), puis le stator (14) est fixé dans le carter de stator (4) au moyen d'un élément de verrouillage (36) en ce que l'élément de verrouillage (36) est inséré dans le carter de stator (4), tout d'abord en direction de son axe longitudinal (Y) entre la périphérie extérieure du stator et la périphérie intérieure du carter de stator puis en le faisant tourner autour de cet axe longitudinal (Y) d'une position libérée vers une position verrouillée dans laquelle il fixe le stator (14) dans le carter de stator (4).

14. Procédé selon la revendication 13, dans lequel le stator (14), avant d'être inséré dans le carter de stator (4), est raccordé, au niveau d'une extrémité axiale, à une boîte à bornes (6), le stator (14) étant relié électriquement à un dispositif électronique de commande ou de régulation (26) à l'intérieur de la boîte à bornes (6).

15. Procédé selon la revendication 14, dans lequel l'élément de verrouillage (36) est inséré dans le carter de stator (4) après insertion du stator (14) dans le carter de stator (4), l'élément de verrouillage (36) venant en prise avec une prise de terre (46) dans la boîte à bornes (6).

16. Procédé selon la revendication 15, dans lequel l'élément de verrouillage est réalisé sous la forme d'un axe de verrouillage et l'axe de verrouillage (36) est inséré dans le carter de stator (4) depuis la face axiale opposée à la boîte à bornes (6) de façon telle que l'axe de verrouillage (36) s'étend parallèlement à l'axe longitudinal (X) du stator (14) entre le stator (14) et le carter de stator (4), tout du long jusque dans la boîte à bornes (6).

17. Procédé de fabrication d'un groupe motopompe, dans lequel un ensemble stator du groupe motopompe est monté au moyen d'un procédé selon l'une des revendications 13 à 16 et dans lequel, après le montage de l'ensemble stator (13), celui-ci est assemblé à un rotor, à une gaine et à un carter de pompe (2).
